# FASCICULE DE BREVET EUROPEEN

(11) **EP 0 514 526 B1**
(45) Date de publication et mention de la délivrance du brevet: **26.04.1995**
(21) Numéro de dépôt: 92901701.0
(22) Date de dépôt: 06.12.1991
(51) Int. Cl.: C21C 5/52, C21C 5/56, F27D 3/00, F27B 3/18, H05B 7/02

(54) **INSTALLATION DE PRODUCTION DE METAL FONDU DANS UN FOUR ELECTRIQUE**
VORRICHTUNG ZUR HERSTELLUNG VON SCHMELZFLÜSSIGEM METALL IM ELEKTROOFEN
FACILITY FOR PRODUCING MOLTEN METAL IN AN ELECTRIC FURNACE

(30) Priorité: 06.12.1990 FR 9015320; 06.12.1990 FR 9015321; 12.12.1990 FR 9015595
(43) Date de publication de la demande: 25.11.1992
(73) Titulaire: CLECIM, F-95863 Cergy-Pontoise Cédex (FR)
(72) Inventeur: BONNET, Claude, F-52160 Andrezieux Bouthéon (FR); FORESTIER, Guy, F-42170 Saint-Just-Saint-Rambert (FR); BARBE, Jacques, F-42100 Saint-Etienne (FR)
(74) Mandataire: Phélip, Bruno
(86) Numéro de dépôt international: FR9100980
(87) Numéro de publication internationale: WO9210594

(56) Documents cités:
- EP-A- 0 225 939
- WO-A-86/01230
- DE-A- 2 612 674
- DE-C- 972 100
- FR-A- 2 435 684
- US-A- 4 506 370
- IRON AND STEEL ENGINEER. vol. 64, no. 5, Mai 1987, PITTSBURGH US pages 43 - 49;W.D.ROPKE ET AL.: 'application of state of the art technology for compactelectric arc furnace steel plants'

## Description

L'invention a pour objet une installation de production d'un métal tel que l'acier par fusion, dans un four électrique, d'une matière ferreuse telle que de la ferraille.

On utilise depuis longtemps, et de plus en plus, des fours électriques à arc pour la production d'acier par fusion de ferraille ou autre matière première ferreuse, par exemple un minerai préréduit.

D'une façon générale, un four électrique à arc comprend une cuve de fusion limitée par une sole réfractaire entourée d'une paroi latérale et fermée, à sa partie supérieure, par un couvercle amovible, la cuve étant associée à une ou plusieurs électrodes reliées à une source de courant. Chaque électrode est fixée à l'extrémité d'un bras s'étendant en porte-à-faux au-dessus de la cuve et pénètre verticalement dans celle-ci en traversant le couvercle par un orifice ménagé à cet effet. Le four peut-être alimenté en courant alternatif au moyen de trois électrodes ou bien en courant continu. Dans ce cas, on utilise une ou plusieurs électrodes traversant la voûte et associées chacune à une ou plusieurs électrodes placées dans la sole et reliées à la source de courant, chacune par un conducteur de retour. Bien entendu, le four est associé à un certain nombre d'appareillages annexes tels que les installations électriques, des moyens de chargement en ferraille et en matières d'addition, des moyens d'évacuation de l'acier fondu et du laitier et des circuits d'évacuation des fumées.

En outre, pour améliorer le rendement du four, il est utile de prévoir un préchauffage de la ferraille avant son entrée dans le four. Souvent, ce préchauffage est réalisé dans une enceinte parcourue par des gaz chauds.

Cet ensemble assez complexe d'appareils onéreux et encombrants est placé dans un bâtiment qui comprend, d'une façon générale, une zone de réception et de reprise de la ferraille, une zone de préchauffage, et une zone d'élaboration.

La ferraille brute arrive dans la zone de réception dans un ou plusieurs récipients ou "paniers" de transport. Ces paniers sont repris et transportés d'une zone à l'autre par un pont roulant circulant au-dessus de toute l'installation.

Chaque panier est généralement muni d'un fond ouvrant constitué de deux coquilles montées rotatives chacune autour d'un axe horizontal et qui, en s'écartant l'une de l'autre, laissent tomber la ferraille qui se déverse dans la cuve du four dont le couvercle a été écarté. A cet effet, la voûte constituant le couvercle ainsi que les électrodes peuvent être suspendues à un portique déplaçable horizontalement ou, de préférence, à des bras montés rotatifs autour d'un axe vertical sur un socle placé à côté du four.

L'élaboration de l'acier génère un important volume de gaz chauds et poussiéreux pendant les phases de fusion et d'affinage et ces fumées sont captées par une hotte branchée sur un circuit d'évacuation des fumées vers l'extérieur, en passant par des moyens de dépoussiérage.

Les gaz chauds servant au préchauffage de la ferraille peuvent être produits à partir de ces fumées dans une chambre de combustion permettant de brûler l'oxyde de carbone et les autres imbrûlés et de récupérer une partie des poussières entraînées par les fumées. Les gaz brûlés sont envoyés vers une ou plusieurs cellules de préchauffage de la ferraille en attente de chargement.

Chaque panier contenant une charge de ferraille froide et se trouvant dans la zone de réception est donc repris par le pont roulant pour être transporté dans une cellule de préchauffage où il reste le temps nécessaire. Après le préchauffage, le panier est transporté par le pont roulant au-dessus de la cuve du four dans laquelle la ferraille préchauffée est déversée par ouverture du fond.

Bien entendu, lors du chargement, le couvercle doit être ouvert et il se produit encore une forte émission de fumées qui ne sont pas captées. Des projections d'acier et de laitier peuvent aussi se produire au moment du déversement de la ferraille dans la cuve.

Comme une telle installation produit, en outre, un bruit important, on cherche à l'isoler autant que possible pour réduire la pollution aussi bien par les fumées que par les bruits.

A cet effet, on a déjà prévu de regrouper la zone de préchauffage et la zone d'élaboration dans une chambre fermée à l'intérieur de laquelle sont produites et rassemblées la plus grande partie des fumées et des poussières qui peuvent ainsi être aspirées par une hotte et envoyées vers un circuit de dépoussiérage. Une telle installation est décrite, par exemple, dans le document US-A-4 506 370. Dans ce cas, en effet, le préchauffage de la ferraille est réalisé dans une enceinte placée à coté du four, l'ensemble étant placé à l'intérieur d'une chambre fermée de dimensions relativement réduites. L'enceinte de préchauffage est limitée par une paroi latérale tubulaire ayant une ouverture supérieure et une ouverture inférieure qui peuvent être fermées de façon amovible. Les fumées chaudes sortant du four sont captées par une conduite qui débouche à la partie supérieure de l'enceinte où se trouvent placés des brûleurs et qui constituent donc la chambre de combustion. Les gaz brûlés traversent l'enceinte et ressortent par une ouverture inférieure branchée sur une conduite d'évacuation vers l'extérieur.

Mais en outre, l'enceinte de préchauffage est aménagée de façon à constituer un récipient muni d'un fond ouvrant pour le chargement du four. A cet effet, l'enceinte est montée sur un chariot ou un pont roulant qui lui permet de se déplacer entre une position de préchauffage placée à côté du four et une position de chargement pour laquelle l'enceinte est placée directement au-dessus du four de façon à déverser les ferrailles dans le four par ouverture du fond ouvrant.

L'introduction dans l'enceinte d'une nouvelle charge de ferraille s'effectue, au moyen d'un panier de chargement classique, à l'extérieur de la chambre fermée.

Le chariot de support de l'enceinte de préchauffage doit donc placer celle-ci en trois positions successives, respectivement une position d'introduction d'une charge de ferraille froide, située à l'extérieur de la chambre fermée, une position de préchauffage à côté du four, pour laquelle l'enceinte est branchée sur des conduites d'introduction et d'évacuation des gaz chauds et une position de chargement, au-dessus du four.

La chambre de captage des fumées doit donc être munie d'une première porte permettant le déplacement de l'enceinte de préchauffage entre la position d'introduction de la ferraille froide, à l'extérieur de la chambre et la position de préchauffage.

Par ailleurs, à la fin de la fusion, l'acier est coulé dans des poches qui doivent elles-mêmes être introduites et évacuées par une autre ouverture munie d'une seconde porte.

Ces deux portes sont de dimensions importantes et présentent donc des risques de fuite. En outre, leur manoeuvre constitue une gêne pour l'exploitation du four.

Par ailleurs, le chariot de déplacement de l'enceinte est relativement encombrant et parcourt une zone assez longue entre la position d'introduction de la charge froide à l'extérieur de la chambre et la position de déversement de la ferraille au-dessus du four. Bien entendu, aucun organe ne doit se trouver sur le passage du chariot et de l'enceinte et, en particulier, les circuits de gaz doivent être aménagés de façon à permettre des branchements et débranchements faciles et à libérer le passage du chariot.

Pour éviter de tels inconvénients, on a proposé, dans le document EP-0 225 939, de laisser fixe l'enceinte de préchauffage et de chargement et de déplacer le four. On peut alors réduire sensiblement les dimensions de la chambre de captage des fumées qui comprend seulement une partie supérieure entourant la base de l'enceinte de préchauffage pour permettre l'ouverture du fond ouvrant, et une partie inférieure dans laquelle vient se placer le four, celui-ci étant monté sur un chariot déplaçable entre la position de chargement pour laquelle le four se trouve au-dessous de l'enceinte de préchauffage et la position d'élaboration à l'extérieur de la chambre de captage des fumées. En effet, dans cette position, le four est fermé par le couvercle portant les électrodes et qui est muni, comme habituellement, d'un orifice sur lequel est branchée une conduite d'évacuation des fumées débouchant dans la chambre de combustion, celle-ci étant placée à la partie supérieure de l'enceinte de préchauffage fixe. Une telle disposition présente effectivement l'avantage de réduire les dimensions de la chambre de captage des fumées qui, en outre, est muni d'une seule porte pour le passage du four. En outre, les circuits de gaz chauds sont fixes à part le branchement amovible sur le couvercle du four et peuvent être disposés autour de l'enceinte de préchauffage.

Toutefois, le four doit être monté sur un chariot déplaçable et fixé de façon amovible sur le berceau qui, comme habituellement, permet son basculement pour la coulée du métal fondu. Une telle disposition complique donc l'installation en raison des dimensions et du poids du four. De plus, l'enceinte de préchauffage étant fixe, l'introduction de la ferraille froide se fait dans une zone où se trouvent les différents circuits de circulation des gaz chauds qui risquent d'être détériorés ainsi que la chambre de combustion placée à la partie supérieure de l'enceinte.

L'invention a pour objet une nouvelle disposition permettant de remédier aux inconvénients des dispositions connues tout en conservant leurs avantages. En particulier, l'invention permet de supprimer totalement la chambre de captage des fumées et, par conséquent, les manoeuvres de portes, de simplifier considérablement les circuits de circulation des gaz, de réaliser une installation plus compacte et d'améliorer la sécurité.

L'invention présente aussi d'autres avantages qui apparaîtront dans la description qui va suivre.

L'invention s'applique donc, d'une façon générale, à une installation de production d'un métal tel que l'acier par fusion d'une charge de matière ferreuse telle que de la ferraille, comportant au moins un four électrique comprenant une cuve de fusion fermée par un couvercle amovible et au moins une électrode reliée à une source de courant et susceptible de pénétrer verticalement dans la cuve en traversant le couvercle, des moyens d'approvisionnement de charges individuelles destinées à être introduites l'une après l'autre dans le four, une enceinte de préchauffage limitée par une paroi latérale ayant deux extrémités ouvertes respectivement supérieure et inférieure et à l'intérieur de laquelle est disposé un récipient de chargement muni d'un fond ouvrant, ladite enceinte étant associée, au moins dans une position de préchauffage à des moyens amovibles de fermeture sensiblement étanche de ses deux extrémités, respectivement supérieure et inférieure et à des moyens de branchement amovible de ladite enceinte, à deux niveaux décalés en hauteur, respectivement sur une conduite d'introduction et sur une conduite d'évacuation d'un courant de gaz chauds, pour le préchauffage de la charge contenue dans le récipient, et un organe de transport de ladite enceinte avec le récipient de chargement entre la position de préchauffage et une position de chargement placée directement au dessus de la cuve du four pour le déversement de la charge par ouverture du fond.

Conformément à l'invention, la partie inférieure de la paroi latérale de l'enceinte de préchauffage forme une jupe largement ouverte vers le bas et l'enceinte est associée, en position de préchauffage, à des moyens amovibles d'application étanche de l'extrémité inférieure de ladite jupe sur un socle fixe de forme conjuguée à celle de l'extrémité inférieure, pour la fermeture étanche de celle-ci en position de préchauffage.

De préférence, l'enceinte de préchauffage est portée par l'organe de transport par l'intermédiaire de moyens de levage déterminant le soulèvement et l'abaissement de l'enceinte entre deux niveaux, respectivement un niveau haut de transport de l'enceinte entre la position de préchauffage et la position de déchargement et un niveau bas pour lequel l'extrémité inférieure de la jupe est appliquée de façon étanche sur le socle de fermeture.

Normalement, l'installation est placée dans un bâtiment comprenant un plancher de circulation au niveau de la paroi latérale de la cuve du four. Dans ce cas, le socle de fermeture de l'enceinte est ménagé sur un plancher de circulation placé au niveau de la partie supérieure de la cuve du four.

L'extrémité inférieure de la jupe présente avantageusement un profil qui correspond sensiblement à celui du bord supérieur de la cuve du four de telle sorte que, dans la position de chargement, ladite jupe forme une hotte de guidage ascendant des fumées sortant du four vers l' enceinte qui constitue une cheminée d'évacuation desdites fumées, la jupe de l'enceinte pouvant aussi être aménagée pour servir au guidage descendant de la charge vers la cuve du four.

Selon une autre caractéristique préférentielle, après déplacement et mise en place de l'enceinte de préchauffage au-dessus de la cuve, les moyens de levage déterminent l'abaissement de l'enceinte de telle sorte que l'extrémité inférieure de la jupe se trouve sensiblement au niveau du bord supérieur de la cuve.

Dans le cas où le fond ouvrant de l'enceinte de chargement est constitué d'au moins deux coquilles relevables, on fait remonter la jupe au-dessus du niveau du fond de façon à entourer la paroi latérale à une certaine distance de celle-ci en ménageant un espace annulaire fermé vers le haut dans lequel remontent les coquilles.

De préférence, la paroi latérale de la jupe est munie d'une tubulure associée à un moyen de branchement amovible sur l'une des branches du circuit de circulation des gaz chauds.

Par ailleurs, le moyen de fermeture de l'extrémité supérieure de l'enceinte de préchauffage est un couvercle monté sur un support avec une possibilité de déplacement vertical limité pour son application sur le récipient et son relèvement, et une possibilité de déplacement horizontal pour son écartement du récipient en position relevée.

Dans un mode de réalisation particulièrement avantageux permettant, notamment, d'améliorer la sécurité, l'organe de transport du récipient de chargement comporte au moins un bras monté pivotant autour d'un axe vertical sur un socle fixe placé entre la zone de réception et la zone d'élaboration et s'étendant en porte-à-faux jusqu'à une extrémité libre munie de moyens de support du récipient de chargement, et est associé à des moyens de commande de la rotation dudit bras autour de son axe pour le déplacement du récipient de chargement suivant un arc de cercle entre la position de préchauffage et la position de déversement dans la cuve du four et inversement.

Selon les cas, le récipient de chargement pourra être monté soit de façon permanente, soit de façon amovible, sur l'organe de transport.

Dans le premier cas, l'organe de transport est placé d'abord dans la position de préchauffage et le récipient est chargé en ferraille froide, normalement au moyen d'un panier, puis son couvercle est refermé et l'enceinte ainsi constituée est branchée sur des conduites fixes d'arrivée et d'évacuation des gaz. Après préchauffage, lesdites conduites sont débranchées, puis l'organe de transport déplace le récipient jusqu'à la position de déversement, au-dessus de la cuve dont la voûte de fermeture a été écartée.

Dans le second cas, l'enceinte est chargée à l'écart de la zone de préchauffage, le couvercle restant porté par l'organe de transport. Après mise en place de l'enceinte dans la position de préchauffage sur l'organe de transport, on ferme le couvercle et on branche les circuits de gaz chauds.

On peut ainsi disposer de plusieurs enceintes chargées à l'avance.

Le couvercle de fermeture de l'enceinte de préchauffage peut être relevé et écarté avant la mise en place de celle-ci dans la position de déversement, au-dessus du four. Cependant, on peut aussi garder le couvercle en place, l'orifice d'évacuation des gaz étant alors branché de façon amovible sur une conduite d'évacuation des fumées du four.

Selon une autre caractéristique avantageuse, l'organe de transport de l'enceinte porte une trémie de chargement en produits d'addition, solidaire en déplacement de l'enceinte de préchauffage et qui est disposée sur l'organe de transport de façon à passer au-dessus de la cuve du four avant ou après l'arrivée de l'enceinte de préchauffage en position de déversement dans une position intermédiaire de déversement des additions.

L'utilisation d'un organe spécifique de transport de l'enceinte de préchauffage entre la zone de réception et la zone d'élaboration permet, en outre, de placer l'installation dans un bâtiment comportant deux halles parallèles adjacentes, respectivement une halle de préparation dans laquelle sont placées la zone de réception et de préchauffage, et une halle d'élaboration dans laquelle est placé le four, l'organe de transport étant placé sur la jonction des deux halles pour le passage de l'enceinte de chargement d'une halle à l'autre.

La cuve du four comprend, comme habituellement, une sole en matière réfractaire entourée d'une paroi latérale munie d'un orifice de coulée du métal fondu et d'au moins un orifice de décrassage et d'évacuation du laitier.

Selon une autre caractéristique avantageuse de l'invention l'orifice de décrassage a une section juste suffisante pour le passage du laitier et le plancher de circulation est placé au-dessus dudit orifice à un niveau assez élevé pour que la plus grande partie de la paroi latérale se trouve au-dessous dudit plancher et que le bord supérieur de la cuve dépasse au-dessus de ce niveau d'une hauteur faible, inférieure à une hauteur d'homme et permettant l'inspection directe de la cuve à partir du plancher, après ouverture du couvercle.

Mais l'invention sera mieux comprise par la description plus détaillée de certains modes de réalisation donnés à titre d'exemple et représentés sur les dessins annexés.

La Figure 1 est une vue en plan schématique de l'ensemble de l'installation.

La Figure 2 est une vue schématique, en coupe transversale, selon II/II de la Figure 1.

La Figure 3 est une vue schématique, en coupe transversale, selon III/III de la Figure 1.

La Figure 4 est une vue schématique, en coupe transversale, selon IV/IV de la Figure 3.

La Figure 5 est une vue de dessus de l'installation représentée sur la Figure 4, en position de déversement de la ferraille dans le four 1.

La Figure 6 représente en élévation et à échelle agrandie, un mode de réalisation préférentiel de l'enceinte de préchauffage et de chargement.

La Figure 7 est une vue en plan schématique d'une installation disposée dans un bâtiment à deux halles.

La Figure 8 est une vue en coupe selon VIII/VIII de la Figure 7.

La Figure 9 est une vue schématique, en élévation, de l'ensemble de l'installation dans une autre disposition.

La Figure 10 représente à échelle agrandie un four électrique perfectionne.

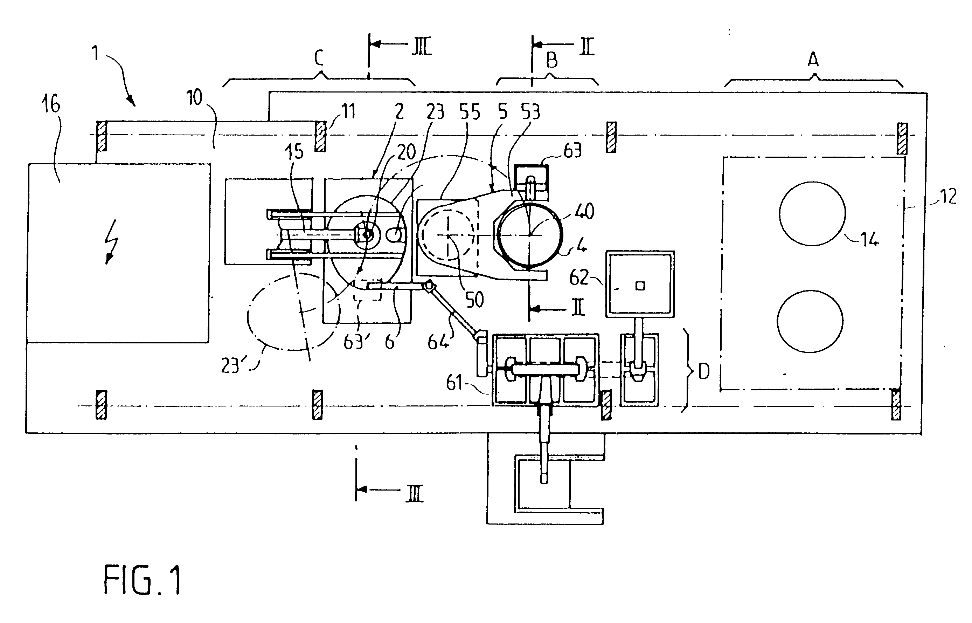

Sur les Figures 1, 2 et 3, on a représenté schématiquement l'ensemble d'une installation d'élaboration placée à l'intérieur d'un bâtiment 1 comprenant, dans l'exemple représenté, une halle principale 10 limitée par des poteaux 11 supportant un pont roulant 12 et recouverte par un toit 13.

A l'intérieur de la halle 10, on peut définir une zone A de réception de la ferraille, une zone B de préchauffage et une zone C d'élaboration. Généralement, l'élaboration du métal nécessite des additions qui sont préparées et stockées dans une zone D placée dans la halle 10 ou dans une halle annexe.

Le four électrique 2, placé dans la zone d'élaboration comprend une cuve 2' constituée d'une sole 8 et d'une virole 20 et fermée par un couvercle 23 à travers lequel passe au moins une électrode 24 reliée une source de courant et pénètrant verticalement dans la cuve 2' en traversant le couvercle 23. Comme on l'a indiqué sur la Figure 1, le couvercle 23 est constitué d'une voûte suspendue à l'extrémité d'un bras s'étendant en porte-à-faux à partir d'un socle 15 et monté pivotant autour d'un axe vertical de façon à pouvoir écarter la voûte jusqu'à la position 23' représentée en pointillés sur la Figure 1 et pour laquelle la cuve est entièrement dégagée.

De même, chaque électrode 24 est montée à l'extrémité d'un bras pivotant également sur le socle 15 autour d'un axe vertical.

Toutes ces dispositions sont classiques et n'ont pas besoin d'être décrites plus en détail. Dans l'exemple représenté, le four 2 comporte une seule électrode et fonctionne donc en courant continu. Il pourrait être également muni de plusieurs électrodes et alimenté en courant alternatif.

La ferraille qui doit être fondue dans le four électrique 2 arrive à l'état brut et froide dans la zone de réception A, dans un ou plusieurs récipients appelés généralement "paniers". Chaque panier 14 a la forme d'une poche ouverte vers le haut et vers le bas, l'orifice inférieur étant fermé par un fond 15 constitué de deux coquilles qui peuvent s'écarter l'une de l'autre par rotation autour d'un axe horizontal.

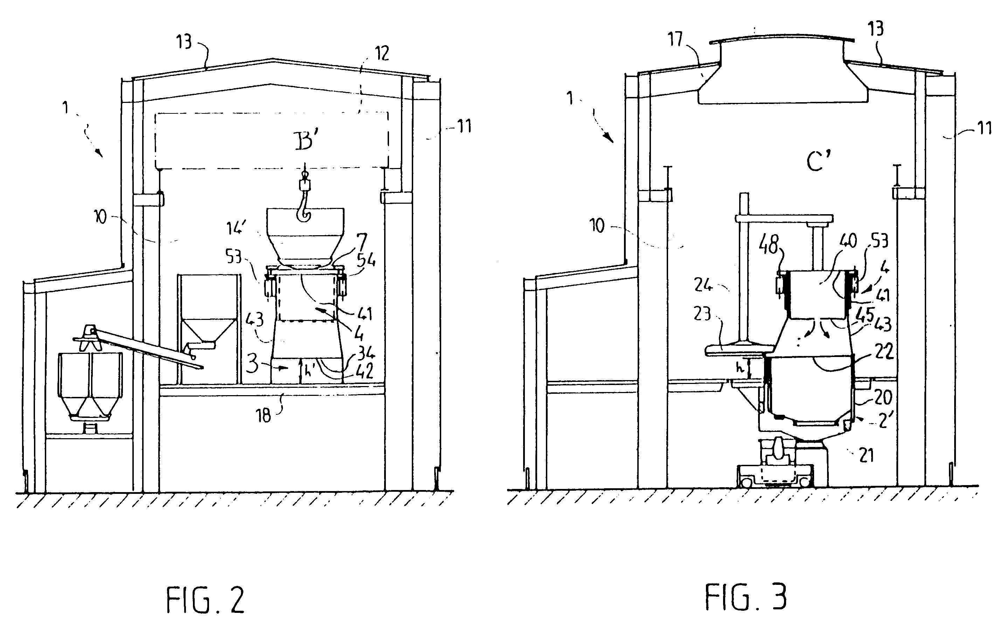

Comme on l'a indiqué, le préchauffage de la ferraille est réalisé à l'intérieur d'une enceinte 4 à l'intérieur de laquelle est disposé un récipient de chargement 40 à fond ouvrant et qui est montée sur un organe de transport 5 lui permettant de se déplacer entre deux positions déterminées, une position B' d'introduction de la ferraille froide, représentée sur la Figure 2 et une position C' de chargement du four, représentée sur la Figure 3. L'enceinte de préchauffage est limitée par une paroi latérale tubulaire 4, à axe vertical, s'ouvrant largement, respectivement vers le haut à son extrémité supérieure 41 et vers le bas à son extrémité inférieure 42.

A l'intérieur de la paroi latérale 4 est disposé un récipient de chargement 40 muni d'un fond ouvrant 45 qui, dans l'exemple représenté, est constitué de deux portes pouvant basculer autour d'un axe horizontal.

Par ailleurs, la partie inférieure de l'enceinte 4 forme une jupe 43 qui entoure le fond ouvrant 45 et s'étend vers le bas au-dessous du niveau de celui-ci.

L'enceinte de préchauffage et de chargement 4 ainsi constituée est supportée, par exemple par l'intermédiaire d'oreilles de suspension 48, par un organe de transport 5 permettant de la déplacer entre la position d'introduction de la ferraille B' et la position de chargement du four C'. Cet organe de transport peut être un simple chariot roulant sur des rails mais, selon l'une des caractéristiques de l'invention, on utilise de préférence un organe spécifique qui sera décrit plus loin.

Comme on l'a représenté schématiquement sur les Figures 2 et 3, le bâtiment 1 dans lequel est placé l'installation comporte un plancher de circulation 18 qui se trouve au niveau de la virole 20 du four, celui-ci étant disposé, comme habituellement, sur un châssis 21 formant un berceau qui repose sur un massif de fondation et peut légèrement basculer vers l'avant ou vers l'arrière.

Pour permettre le basculement du four dans un sens ou dans l'autre, le plancher de circulation 18 est muni d'une large ouverture recouverte par un plancher auxiliaire 19 solidaire du châssis 21 du four.

Le bord supérieur 22 de la cuve 20 du four se trouve ainsi placé à une hauteur h au-dessus du plancher 18.

Comme on le voit sur la Figure 2, dans la position de préchauffage B', l'enceinte 4 est appliquée sur un socle fixe 3 reposant sur le plancher de circulation 18 et constitué, par exemple, d'une paroi verticale cylindrique fermée vers le bas par le plancher 18 et s'ouvrant vers le haut le long d'un bord supérieur 34 qui présente une forme conjuguée à celle de l'extrémité inférieure 42 de la jupe 43 et se trouve placé à une hauteur h' au-dessus du plancher 18 sensiblement égale à la hauteur h du bord supérieur 22 de la cuve 20 du four 2. Par ailleurs, l'enceinte 4 repose sur l'organe de transport 5 par l'intermédiaire d'un dispositif de levage 54 constitué, par exemple, de deux vérins placés respectivement de part et d'autre de l'enceinte 4 et prenant appui sur les oreilles 48 de celle-ci.

Le dispositif de levage 54 permet de soulever ou d'abaisser l'enceinte 4 entre deux niveaux, respectivement un niveau haut de transport et un niveau bas pour lequel le bord inférieur 42 de la jupe 43 vient s'appliquer de façon étanche sur le bord supérieur 34 du socle 3, celui-ci constituant ainsi, dans la position de préchauffage B', un moyen de fermeture étanche de l'extrémité inférieure de l'enceinte 4.

Par ailleurs, l'extrémité supérieure 41 de l'enceinte 4 est fermée par un couvercle amovible 7 qui peut, d'une part, être soulevé et abaissé et, d'autre part, être écarté latéralement pour dégager l'ouverture supérieure 41.

Lorsque l'enceinte 4 est posée, en position de préchauffage, sur le socle 3, le couvercle 7 est d'abord écarté pour permettre l'introduction d'une charge de ferraille froide au moyen d'un panier 14', comme on l'a indiqué sur la Figure 2.

Le couvercle 7 est ensuite refermé et le récipient 4 constitue alors une enceinte fermée dans laquelle on peut faire passer un courant de gaz chauds.

Ces derniers sont avantageusement produits de la façon habituelle par combustion des fumées sortant du four 2 dont le couvercle 23 est muni, à cet effet, d'un orifice débouchant dans une tubulure 26 sur laquelle peut être branchée, de façon amovible, une conduite 33 par laquelle les fumées sont dirigées vers une chambre de combustion où elles sont brûlées pour produire des gaz chauds servant au préchauffage de la ferraille.

Dans les installations connues, les fumées étaient dirigées immédiatement vers l'enceinte de préchauffage dont la partie supérieure était munie de brûleurs de façon à constituer la chambre de combustion. Mais une telle disposition complique la réalisation de l'enceinte de préchauffage et peut, en outre, gêner l'introduction de la charge froide qui risque de détériorer la chambre de combustion.

Dans l'invention, au contraire, la chambre de combustion 30 est placée sous le plancher de circulation 18 et, de préférence, directement au-dessous du socle 3.

De la sorte, le couvercle 7 est un simple organe d'obturation qui peut être réalisé de façon simple et légère, et l'extrémité supérieure 41 de l'enceinte 4 est entièrement dégagée après retrait du couvercle.

De plus, immédiatement après la sortie de la tubulure 26 branchée sur le couvercle 23 du four, la conduite 33 d'évacuation des fumées vers la chambre de combustion 30 est coudée pour descendre au-dessous du plancher 18 en dégageant ainsi tout l'espace au-dessus du four. De plus, la position de la tubulure 26 sur le couvercle 23 peut être déterminée de façon que la conduite 33 ne gêne pas le déplacement de l'enceinte de préchauffage avec l'organe de transport 5.

Il en est de même de la conduite 35 d'évacuation des gaz chauds vers l'enceinte de préchauffage et vers le dépoussiéreur qui peut également s'étendre au-dessous du plancher 18 sans gêner le déplacement de l'enceinte 4.

De la sorte, tout l'espace situé au-dessus du plancher 18 et autour de l'enceinte de préchauffage est bien dégagé et il est donc possible, sans risque de détérioration des circuits de gaz, d'amener le panier de chargement 14' directement au-dessus de l'enceinte 4 dans la position de préchauffage B', comme on l'a représenté sur la Figure 2. Ainsi, il n'est plus nécessaire, pour le chargement de l'enceinte en ferraille froide, d'amener celle-ci dans une troisième position, ce qui simplifie les manutentions.

On notera, en outre, qu'en raison de la bonne étanchéité de l'enceinte de préchauffage et du fait que la plus grande partie des circuits est placée au-dessous du plancher 18, toutes les manoeuvres de portes sont supprimées, l'utilisation d'une chambre fermée de captage des fumées n'étant plus nécessaire.

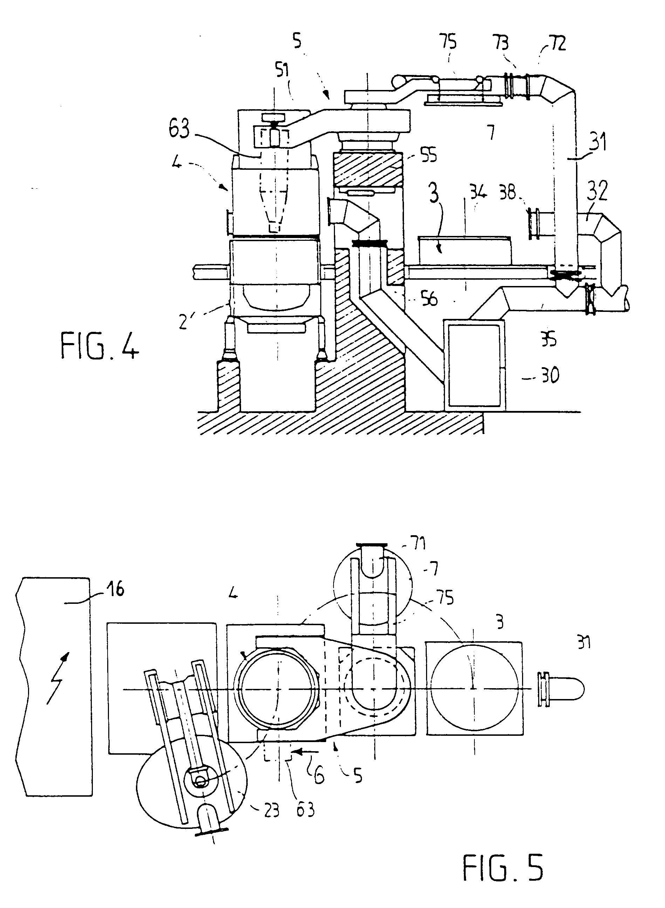

Mais il est encore plus avantageux de réaliser le déplacement de l'enceinte de préchauffage 4 entre la position de préchauffage B' et la position de chargement C' au moyen d'un organe de transport pivotant, selon la disposition représentée sur les Figures 4 à 8.

Dans ce cas, en effet, l'enceinte 4 est suspendue à l'extrémité d'un bras pivotant 51 s'étendant en porte-à-faux à partir d'un massif de support 52 placé à côté du four 2, et monté rotatif autour d'un axe vertical 50.

A son extrémité libre, le bras 51 forme une fourche 53 dans laquelle vient s'engager l'enceinte 4.

De la sorte, comme on l'a indiqué sur la Figure 1, l'axe de l'enceinte 4 décrit, par rotation du bras 51, un arc de cercle centré sur l'axe 50, entre la position de préchauffage B' écartée du four et la position de chargement C', l'axe 50 étant placé par rapport au four 2 de telle sorte que l'axe du récipient 4 vienne se placer, après rotation, dans l'alignement de l'axe de la cuve 2' du four.

Les moyens de levage de l'enceinte 4 sont constitués de deux vérins 54 montés sur les deux branches 53 du bras 51 (Figure 4) et qui permettent, comme on l'a vu, de régler sa hauteur de façon limitée entre le niveau haut de transport et le niveau bas de fermeture.

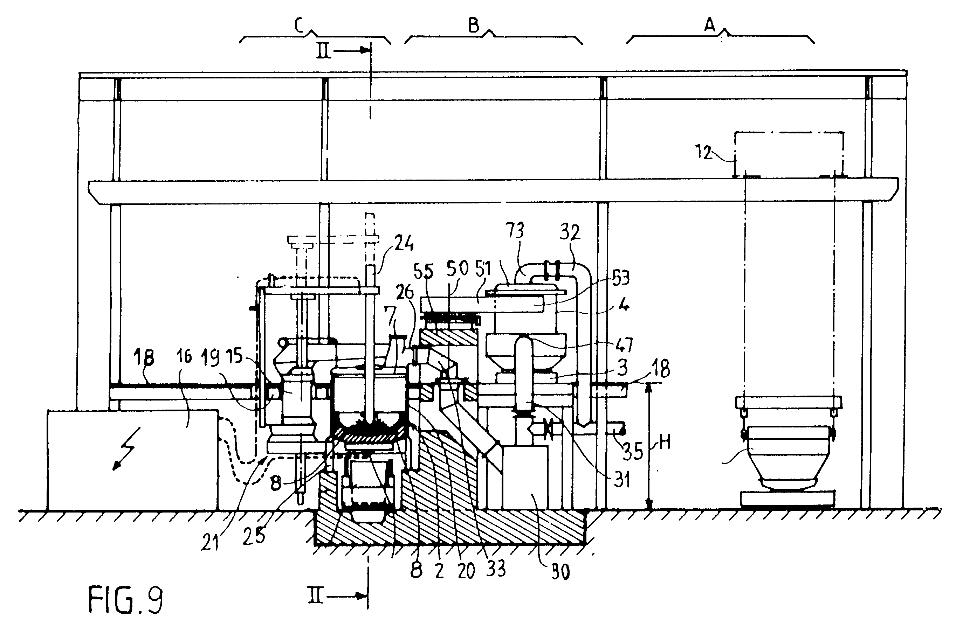

Les circuits de circulation des gaz ont été représentés en détail sur la Figure 8 qui montre l'ensemble de l'installation en position de préchauffage.

Dans cette position, le four 2 est en fonctionnement, le couvercle 23 étant fermé et l'électrode 24 abaissée. L'organe de transport 5 a été tourné du côté opposé au four 2 de façon à poser l'enceinte de préchauffage 4 sur le socle fermé 3 placé sur le plancher 18. On notera que les vérins 54 permettent de régler la pression d'application de l'enceinte 4 sur le socle 3, la plus grande partie de la charge étant supportée par le bras 51.

Il est possible de faire passer à l'intérieur du massif de support 52 la conduite 33 d'évacuation des fumées vers la chambre de combustion 30 placée en-dessous du plancher 18. On diminue ainsi la longueur du circuit qui, en outre, est bien protégé. Les gaz produits par la combustion s'échappent vers un circuit de dépoussiérage et d'évacuation par la conduite de sortie 35 sur laquelle est branchée en dérivation une conduite 31 qui s'étend au-dessus du plancher 18 et dont l'extrémité supérieure peut être branchée au moyen d'un joint amovible 73, sur une tubulure 71 débouchant dans le couvercle 7.

Des vannes 36 et 37 sont placées respectivement sur les conduites 35 et 31, en aval de la bifurcation de façon à diriger les gaz, soit vers l'enceinte 4, par la conduite 31, soit directement vers le dépoussiérage, par la conduite 35.

Par ailleurs, l'enceinte 4 est munie, à sa partie inférieure, d'une tubulure 47 qui, lorsque l'enceinte 4 est placée sur le socle 3, vient se placer en face de l'extremité d'une conduite de dérivation 32 munie d'un organe de branchement amovible 38. La conduite 32 débouche, à son autre extrémité, dans la conduite 35, en aval de la vanne 36.

Ainsi, la vanne 36 étant fermée et la vanne 37 ouverte, les fumées sortant du four par la conduite 33 sont d'abord brûlées dans la chambre de combustion 30 pour produire des gaz chauds qui sont évacués par la conduite de sortie 35 et remontent par la conduite 31 pour déboucher à la partie supérieure de l'enceinte 4. La partie inférieure de celle-ci étant fermée de façon étanche par le socle 3, les gaz descendent à l'intérieur de l'enceinte 4 en cédant leur chaleur à la charge de ferraille contenue dans le récipient 40, passent à travers le fond 45 qui n'est pas étanche, débouchent dans la jupe 43 et sont évacués vers l'extérieur par la tubulure 47 et la conduite d'évacuation 32 branchée sur la conduite 35 en aval de la vanne 36.

Le processus de circulation des gaz qui vient d'être décrit correspond au régime normal dans lequel une charge de ferraille est en cours de fusion dans le four et une charge froide en cours de préchauffage dans l'enceinte 4.

Cependant, au démarrage de l'intallation, l'enceinte 4 sert uniquement au chargement du four 2 en ferraille froide. La vanne 36 est alors ouverte et la vanne 37 fermée de façon que les gaz produits dans le four soient évacués directement, par la conduite 35, vers l'installation de dépoussiérage.

Lorsque le four 2 doit être réalimenté en ferraille, l'électrode 24 est remontée et la conduite 33 est débranchée, ce qui permet l'ouverture du couvercle 23. De même, les conduites 31 et 72 sont débranchées respectivement des tubulures 47 et 71. Le couvercle 7 est retiré et, le récipient 4, ainsi libéré, est placé, par rotation de l'organe de transport 5, au-dessus de la cuve 2' du four dans la position représentée sur les Figures 3 et 4. La ferraille préchauffée est alors déversée dans la cuve 2'.

Selon une autre disposition avantageuse représentée sur les Figures 3 et 5, l'orifice inférieur 42 de la jupe 43 présente un profil sensiblement identique à celui du bord supérieur de la virole 20 de la cuve 2' du four 2.

Souvent, la virole 20 est cylindrique et, dans ce cas, on donne à l'orifice 42 un profil circulaire de même diamètre.

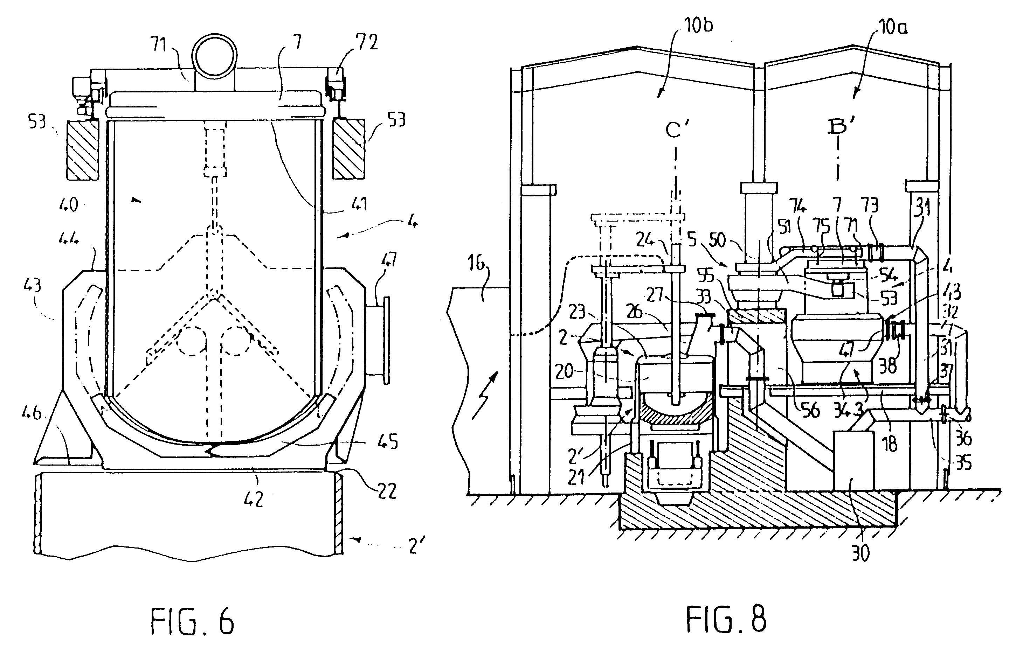

Mais il arrive aussi que l'on donne à la virole 20 et au couvercle 23 une forme ovoïde de façon à recouvrir le bec de coulée de l'acier ménagé habituellement sur un côté de la sole 8 du four. Dans ce cas, on peut donner à l'extrémité inférieure 42 de la jupe 43 la même force ovoïde. Mais comme on l'a indiqué sur le Figure 6, la jupe 43 peut aussi avoir une section circulaire de même diamètre que le four, l'orifice 42 étant seulement prolongé sur un côté par une plaque 46 susceptible de recouvrir la partie ovale du four correspondant au bec de coulée.

Ainsi, lorsque le récipient 4 est placé au-dessus de la cuve 2' du four, celle-ci est entièrement recouverte par la base 45, 46, de la jupe 43 qui, grâce au dispositif de levage 54, peut être placée à une très faible distance du bord supérieur 22 de la paroi latérale 20 de la cuve 2' et constitue ainsi une hotte de guidage sensiblement étanche des gaz vers l'enceinte 4 qui forme une cheminée dirigeant les gaz directement vers la hotte d'aspiration 17.

A cet égard, on notera que le chargement du four au moyen de l'enceinte de préchauffage mobile permet d'éviter de placer un pont roulant sur le passage des fumées.

Par ailleurs, la partie inférieure de la jupe 43 peut être aménagée de façon à canaliser les ferrailles vers le centre de la cuve 2' du four en diminuant ainsi les risques de dépôt sur les bords de la sole et de détérioration de la paroi latérale 20.

Lorsque le fond ouvrant 45 est constitué de deux coquilles montées pivotantes autour d'axes horizontaux, il est intéressant d'utiliser la disposition représentée en détail sur la Figure 6.

Dans ce cas, la jupe 43 remonte au-dessus du niveau du fond 42 du récipient 40 en entourant la partie inférieure de la paroi latérale 4 à une certaine distance de celle-ci, de façon à ménager un espace annulaire fermé vers le haut par une cloison 44 et dans lequel peuvent remonter les deux coquilles de fermeture 45. La jupe 43 peut se resserrer vers le bas jusqu'à l'orifice inférieur 42 pour assurer le guidage des ferrailles vers le four.

Dans le mode de réalisation représenté sur la Figure 6, le couvercle 7 est porté par un chariot 72, par exemple par l'intermédiaire de câbles de suspension 75 qui permettent de lever ou d'abaisser le couvercle 7. Après relèvement du couvercle 7, le chariot 72 se déplace sur des rails montés sur les deux branches 53 du bras 51 de l'organe de transport 5 pour écarter le couvercle 7 et ouvrir l'orifice supérieur 41 de l'enceinte 4, ce dernier étant refermé par des déplacements inverses.

Selon une autre disposition représentée sur les Figures 4, 5 et 8, le couvercle 7 est suspendu à un bras auxiliaire 74 monté pivotant autour de l'axe 50 du bras 51, au-dessus de ce dernier.

Il est ainsi possible de déplacer le couvercle 7 indépendamment de l'enceinte 4.

Lorsque le couvercle 7 est relevé, le bras auxiliaire 74 accompagne le mouvement du bras 51 et du récipient 4 mais est arrêté dans la position transversale 7' représentée sur la Figure 3 et est laissé dans cette position lorsque l'enceinte 4 revient dans la position de préchauffage B' après avoir déversé la charge de ferraille préchauffée dans le four 2. L'orifice supérieur 41 reste ainsi ouvert et l'on peut introduire dans le récipient 40 une nouvelle charge de ferraille froide amenée par un panier 14 suspendu au pont roulant. Par rotation du bras 74, on ramène alors le couvercle 7 au-dessus du récipient 4 qui a lui-même été abaissé de façon à reposer le socle 3. On descend le couvercle 7 pour fermer hermétiquement l'orifice 41 et l'on branche les conduites d'alimentation 31 et d'évacuation 32 des gaz chauds. L'enceinte 4 est alors en position pour le préchauffage de la nouvelle charge.

On notera que l'utilisation d'un organe pivotant 5 de support et de transport du récipient de chargement 4 présente de nombreux avantages.

En effet, l'enceinte de préchauffage 4 se déplace ainsi à un niveau constant entre les deux positions fixes, respectivement, de préchauffage et de déversement dans la cuve en suivant un parcours circulaire bien déterminé qui contourne le massif de support 55 et le four 2. On connaît donc avec précision le chemin parcouru et le niveau du déplacement et la zone couverte par l'enceinte 4 est plus réduite et moins gênante que dans le cas où l'enceinte est déplacée par translation sur un chariot. En particulier, les différents organes, et notamment toutes les conduites de circulation des gaz, peuvent être positionnés de façon à rester écartés, à tout moment, de l'enceinte 4 dont le transport s'effectue en toute sécurité.

On voit, notamment, sur la Figure 1, que l'enceinte 4, en pivotant autour de l'axe 50, reste d'un seul côté du plan médian vertical passant par l'axe C' de la cuve 2' et l'axe B' du socle 3 et arrive sur la cuve suivant une direction perpendiculaire à ce plan, le couvercle 23 du four étant écarté de l'autre côté ainsi que tous les organes annexes. Les risques d'interférence sont donc limités bien que l'ensemble soit plus compact.

Le positionnement et les dimensions de l'organe de transport 5 seront prévus dans ce but en tenant compte, notamment, de la forme de la halle 10 et de l'implantation des différents organes.

Ainsi, dans l'exemple représenté sur la Figure 1, les différents dispositifs sont placés dans l'alignement des uns des autres à l'intérieur d'une halle unique 10, le bras de support 51 tournant de 180° entre la position de prise en charge et la position de déversement. On libère ainsi tout un côté de la halle dans laquelle peuvent être placés, notamment, des dispositifs d'alimentation en additions à partir d'un certain nombre de trémies 61.

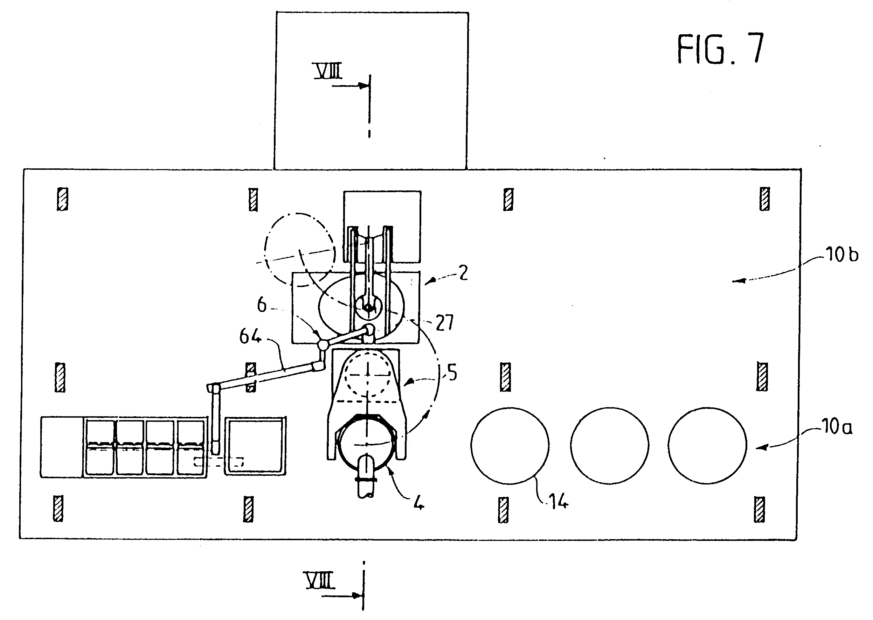

Grâce à l'utilisation d'un organe de transport rotatif entre les deux zones de préchauffage et d'élaboration, il est particulièrement avantageux de disposer l'installation, comme on l'a représenté sur les Figures 7 et 8, dans deux halles parallèles, respectivement une halle 10a où sont placées la zone de réception A, la zone de préchauffage B et la zone D de préparation des éléments d'addition, et une halle 10b dans laquelle est placé uniquement le four, sur un plancher de coulée entièrement dégagé. Toutes les manutentions des paniers s'effectuent ainsi dans la halle 10a et la halle 10b peut être munie d'un pont roulant servant uniquement à l'entretien.

Il est ainsi plus facile d'isoler le four et de capter les fumées, tous les circuits de gaz étant ramenés dans la halle de préparation 10a.

D'une façon générale, les dispositions selon l'invention permettent de réaliser, plus facilement et de façon plus rationnelle, les diverses opérations et, en particulier, de réduire la pollution et les pertes thermiques, notamment en éliminant les temps d'ouverture du couvercle.

Par exemple, l'organe pivotant 5 de transport de l'enceinte 4 peut être utilisé pour introduire plus facilement dans la cuve, avant ou après le déversement des ferrailles, des éléments d'addition tels que castine, chaux, charbon, etc...

En effet, comme on l'a indiqué en traits mixtes sur les Figures 1, 4 et 5, on peut équiper le bras 51 du pivoteur 5 d'une trémie auxiliaire 63 qui est placée à côté de l'enceinte 4, sensiblement dans le plan médian de celle-ci.

Ainsi, comme le montre notamment la Figure 5, la trémie auxiliaire 63 est entraînée avec l'enceinte 4 dans le mouvement de rotation du bras 5 et passe donc au-dessus du four avant l'enceinte 4. Elle a pu être chargée à l'avance d'éléments d'addition que l'on déverse dans le four lors du passage de la trémie 63 au-dessus de celui-ci.

Mais, de préférence, comme on l'a indiqué sur la Figure 1, on place dans la zone D de la halle un certain nombre de trémies 61 de stockage des différents éléments d'addition qui sont associés à des moyens de chargement continu 6 débouchant au-dessus de la position occupée par la trémie 63 lorsque celle-ci passe elle-même au-dessus du four. Le dernier tronçon des moyens de chargement 6 peut être constitué, par exemple, d'une goulotte 64 montée pivotante de façon à dégager l'espace au-dessus du four pour permettre la rotation du couvercle 23.

Comme on l'a indiqué sur les Figures 1 et 5, la goulotte de chargement 6 peut également déboucher au-dessus de la trémie auxiliaire 63 placée à côté de l'enceinte 4 lorsque celle-ci est elle-même disposée dans l'axe du four. Il suffit, en effet, d'aménager la sortie de la trémie 63 pour que celle-ci débouche dans la cuve du four en traversant la jupe 43.

Mais, selon une autre disposition avantageuse représentée sur la Figure 8, étant donné que la conduite 33 d'évacuation des fumées est coudée vers le bas dès la sortie de la tubulure 26 pour diriger les fumées vers la chambre de combustion 30 placée au-dessous du plancher 18, il est aussi possible de placer à la partie supérieure de la tubulure 26 d'évacuation des fumées un orifice 27 fermé de façon amovible et dans lequel débouche l'organe 6 de chargement des additions qui peuvent ainsi être déversées directement dans le four sans ouverture du couvercle 23 et, par conséquent, pendant les opérations de fusion, en réduisant au minimum les pertes thermiques et les dégagements de fumées.

Dans les exemples représentés, l'enceinte de préchauffage 4 est fixée de façon permanente sur l'organe de transport 5, le chargement en ferraille froide étant donc effectué dans la position de préchauffage. Cependant, l'enceinte 4 pourrait aussi être simplement posée de façon amovible sur le bras 5 du pivoteur dont la forme en fourche permet une introduction facile. Il serait alors possible de charger la ferraille froide dans une troisième position et d'amener, ensuite, l'enceinte 4 sur le bras 51. De la sorte, il y aurait encore moins de risques de détérioration des circuits de gaz, avec, toutefois, l'inconvénient d'un transport supplémentaire de l'enceinte de préchauffage 4.

D'autre part, on voit sur les Figures que seules les conduites d'alimentation 31 et d'évacuation 32 branchées sur le préchauffage 4 doivent s'étendre au-dessus du plancher 18 et qui, pour leur plus grande partie, les circuits de circulation et d'évacuation des gaz sont placés avec la chambre de combustion 30 au-dessous de ce plancher qui limite ainsi, vers le haut, la zone où peuvent se produire les dégagements de fumées et de poussières, cette zone étant bien séparée de la zone d'élaboration C par le socle 55, en particulier lorsque le bâtiment 1 comporte deux halles distinctes.

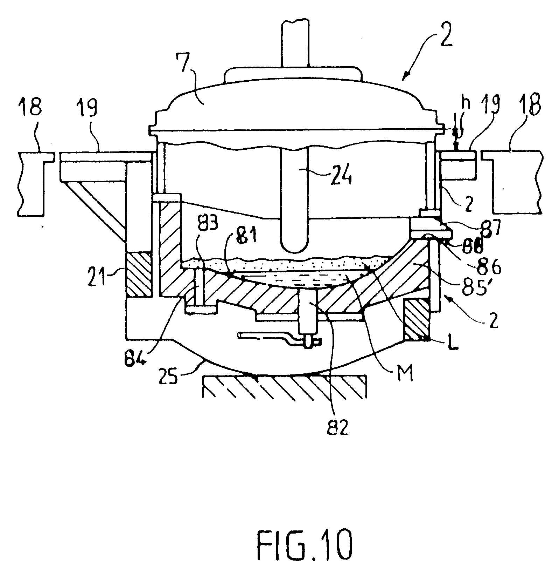

Pour améliorer encore le rendement thermique de l'installation et le confinement des fumées et poussières au-dessous du plancher de travail 18, il peut être intéressant, comme on l'a représenté sur les Figures 9 et 10, de surélever le plancher de travail 18 sensiblement jusqu'au niveau du bord supérieur 22 de la cuve 20.

Tout d'abord, on dégage ainsi, à l'étage inférieur, un espace de hauteur H plus important, ce qui facilite la mise en place, au-dessous du plancher, de la chambre de combustion 30 et des différents circuits de gaz.

De plus, comme on l'a représenté sur la Figure 9, cette surélévation du plancher de circulation 18 permet de placer au-dessous de celui-ci toute l'installation 16 de production de courant électrique et, ainsi, de mettre à l'abri des projections d'acier et autres pollutions l'ensemble des installations électriques. Le plancher 18 est alors entièrement dégagé, ce qui assure une circulation facile, autour du four, du personnel et du matériel d'entretien et accroît la sécurité.

Il faut noter que, jusqu'à présent, il avait semblé préférable de placer les bornes de branchement au-dessus du niveau de la cuve de façon à réduire la longueur des boucles que doivent former les conducteurs pour permettre le mouvement vertical des électrodes et, par conséquent, les longueurs des conducteurs reliant les électrodes au transformateur.

Cependant, un tel allongement des conducteurs ne présente des inconvénients que pour le courant alternatif et c'est pourquoi, lorsque le four est alimenté en courant continu, la source de courant 35 peut être placée entièrement au-dessous du niveau du plancher 18, comme on l'a représenté sur la Figure 9.

Mais la surélévation du plancher de circulation 18 conduit également à modifier le four d'une façon permettant d'améliorer le rendement thermique et de diminuer les pollutions.

D'une façon générale, en effet, la sole en forme de cuvette sur laquelle se forme le bain de métal fondu recouvert d'un laitier présente, en section horizontale, une forme ovoïde formant un bec de coulée de l'acier placé à un niveau supérieur à celui de la cuvette et constituant un seuil de retenue du métal.

Comme on l'a déjà indiqué, le four 2 est monté dans un châssis 21 reposant sur le massif de fondation par l'intermédiaire d'appuis arrondis 25 sur lesquels le four 2 peut rouler en basculant ers l'avant pour faire passer l'acier au-dessus du seuil et le couler dans une poche placée au niveau inférieur sur le sol du bâtiment 1.

Sur la partie arrière de la cuve, du côté opposé au bec de coulée de l'acier, la paroi latérale du four est munie, habituellement, d'un second orifice dit de décrassage, par lequel peut être évacué périodiquement le laitier recouvrant le bain de métal. A cet effet, la partie inférieure de l'orifice de décrassage forme également un seuil placé, parfois, à un niveau légèrement plus élevé que le bec de coulée de l'acier et l'évacuation du laitier est réalisée par basculement du four vers l'arrière, l'angle d'inclinaison étant réglé de façon à permettre le déversement du laitier dans une poche placée au-dessous du four en retenant l'acier dans la cuvette.

L'orifice de décrassage se trouve ainsi placé au-dessus du niveau du plancher de circulation et permet à un opérateur d'observer l'intérieur de la cuve, par exemple pour vérifier l'état de la charge et des parois en repérant les détériorations du réfractaire et les dépôts éventuels de ferraille et, à l'arrêt, pour surveiller le travail de réparation, en particulier lorsqu'il est effectué par des robots. A cet effet, l'orifice de décrassage s'ouvre largement dans la paroi latérale de la cuve et est muni d'une porte amovible. Outre d'autres inconvénients, il en résulte des fuites qui diminuent le rendement thermique et le dégagement de fumées chaque fois que l'on ouvre l'orifice de décrassage.

De tels inconvénients sont évités grâce à la surélévation du plancher 18 qui permet de modifier le four de la façon représentée, à échelle agrandie, sur la Figure 10.

De façon classique, le four comprend une cuve 2' limitée par une paroi latérale 20 et fermée par un couvercle 23 dans lequel pénètre l'électrode consommable 24.

Le fond de la cuve forme une sole 8 creusée en forme de cuvette 81 dans laquelle est placé un organe conducteur formant une électrode de sole 82 qui se trouve au contact et de la charge de ferraille placée sur la sole au début de l'opération.

Il se forme ainsi, entre l'électrode consommable 24 et la ferraille, des arcs électriques qui provoquent la fusion de la ferraille, le métal fondu formant dans la cuvette un bain métallique M recouvert d'un couche de laitier L.

A la fin de l'opération, l'électrode 24 est relevée et le four 1 est basculé vers l'avant, c'est-à-dire vers la gauche sur la Figure 10. Le bain d'acier 36 déborde au-dessus du bord supérieur de la cuvette 81 qui forme un seuil 83.

Comme on l'a indiqué, le seuil avant 83 débouche habituellement dans un orifice ménagé dans la paroi latérale de la cuve et prolongé par un bec de coulée.

Cependant, dans l'exemple représenté, la cuve 2 du four n'est pas munie d'un bec de déversement de l'acier, la sole 8 étant relevée sur ses bords par une paroi réfractaire sensiblement verticale 85 formant la base de la paroi latérale 20 de la cuve 2'. Le seuil 83 est percé d'un trou de coulée 84 sensiblement vertical traversant la sole et fermé de façon amovible par un moyen connu comme une busette.

Ainsi, lorsque le four est incliné vers l'avant, le métal fondu M passe au-dessus du trou de coulée 84 et, après ouverture de la busette, est déversé dans une poche de coulée placée au niveau inférieur, sur le sol du bâtiment 1.

Lorsque le four 1 est incliné vers l'arrière, le laitier L puis le bain de métal M débordent au-dessus du bord opposé de la cuvette 81 qui est prolongée vers le haut par un bord relevé 85' jusqu'à un seuil arrière 86. Le laitier L qui flotte au-dessus du métal M déborde le premier et peut ainsi être évacué par un orifice 87 ménagé dans la paroi réfractaire et prolongé éventuellement par un bec de coulée 88 à partir duquel le laitier peut être déversé dans une poche de coulée placée à cet effet au niveau inférieur.

Comme on le voit sur les Figures 9 et 10, le plancher de circulation 18 et le plancher auxiliaire 19 sont surélevés largement au-dessus du seuil de décrassage 86 de façon que la paroi latérale 20 de la cuve 2 ne dépasse au-dessus du niveau desdits planchers 18 et 19 que sur une hauteur réduite h, simplement nécessaire pour des questions de sécurité et qui peut être de quelques dizaines de centimètres et, en tout cas, bien inférieure à une hauteur d'homme.

Ainsi, lorsque le couvercle 23 est ouvert, un opérateur peut se déplacer librement autour du four en ayant une vue plongeante qui lui permet de bien observer l'intérieur de la cuve 2. Bien entendu, une rambarde de sécurité peut être fixée sur le plancher 18 ou 19.

De ce fait, il est possible de réduire considérablement la section de l'orifice de décrassage 87 qui doit seulement être suffisante pour réaliser l'évacuation du laitier L dans de bonnes conditions, la continuité de la paroi latérale 21 pouvant alors être assuré.

De telles dispositions présentent des avantages importants.

En premier lieu, les fumées qui se dégagent à la coulée du métal M ou du laitier sont confinées au-dessous du plancher 18 et facilement aspirées vers les dispositifs de dépoussiérage.

De plus, la réduction de section de l'orifice de décrassage 87 permet de diminuer les entrées d'air et facilite, en cas de besoin, l'obturation de cet orifice alors que, auparavant, les grandes dimensions de l'orifice de décrassage ne permettaient pas de le fermer de façon réellement étanche. Il est ainsi plus facile de réaliser un équilibre de pression permettant d'éviter les entrées d'air et, par conséquent, d'améliorer le bilan énergétique du four.

On notera également que la hauteur du socle 3 se trouve réduite lorsque le plancher 18 sur surélevé.

Mais l'invention ne se limite évidemment pas à deux seuls modes de réalisation qui ont été décrits en détail, d'autres perfectionnements et d'autres variantes pouvant être imaginées sans s'écarter du cadre de protection défini par les revendications.

En particulier, dans les exemples représentés sur les Figures, on utilise une seule enceinte de préchauffage 4 fixée de façon permanente sur le bras 51 et qui est chargée en ferraille froide dans la position de préchauffage, avant fermeture du couvercle.

Mais comme le couvercle 7 est séparé de l'enceinte et porté par l'organe de transport 5, on pourrait aussi disposer de plusieurs enceintes amovibles spécialement ménagées et chargées à l'avance de ferraille froide pour être placées l'une après l'autre en position de préchauffage sur l'organe de transport 5.

Par ailleurs, les gaz chauds peuvent circuler dans l'enceinte 4, de haut en bas, comme sur les Figures 1 à 8, ou bien de bas en haut, comme sur la Figure 9.

D'une façon générale, les circuits de circulation des gaz et fumées pourront être placés de la façon la plus adéquate, selon la disposition des différents organes, pour diminuer la longueur des conduites, simplifier leur tracé, éviter les dégagements de fumées, faciliter le déplacement de l'enceinte 4, etc...

Par exemple, on pourrait faire déboucher directement la conduite 31 dans le socle 34 par un orifice ménagé dans le plancher 18.

Les signes de référence, insérés après les caractéristiques techniques mentionnées dans les revendications, ont pour seul but de faciliter la compréhension de ces dernières et n'en limitent aucunement la portée.

## Revendications

1. Installation de production d'un métal tel que l'acier par fusion d'une charge de matière ferreuse telle que de la ferraille comportant :
- au moins un four électrique (2) comprenant une cuve de fusion (2') fermée par un couvercle amovible (23) et au moins une électrode (24) reliée à une source de courant (16) et susceptible de pénétrer verticalement dans la cuve en traversant le couvercle (23),
- des moyens (12) (14) d'approvisionnement de charges individuelles destinées à être introduites l'une après l'autre dans le four,
- une enceinte de préchauffage (4) limitée par une paroi latérale ayant deux extrémités ouvertes, respectivement supérieure (41) et inférieure (42) et à l'intérieur de laquelle est disposé un récipient de chargement (40) muni d'un fond ouvrant (45), ladite enceinte étant associée, au moins dans une position de préchauffage (B') à des moyens amovibles (7, 8) de fermeture sensiblement étanche de ses deux extrémités, respectivement supérieure (41) et inférieure (42) et à des moyens (47) (73) de branchement amovible de ladite enceinte (4), à deux niveaux décalés en hauteur, respectivement sur une conduite d'introduction (31) et sur une conduite d'évacuation (32) d'un circuit (35) de circulation d'un courant de gaz chauds pour le préchauffage de la charge contenue dans le récipient (40),
- un organe (5) de transport de ladite enceinte (4) avec le récipient de chargement (40) entre la position de préchauffage (B') et une position de chargement (C') directement au dessus de la cuve (2') du four (2) pour le déversement de la charge par ouverture du fond (45),
caractérisée par le fait que la partie inférieure de la paroi latérale de l'enceinte (4) de préchauffage forme une jupe (43) s'ouvrant largement vers le bas jusqu'à une extrémité inférieure 42 et que l'enceinte (4) est associée, en position de préchauffage, à des moyens amovibles (54) d'application étanche de l'extrémité inférieure (42) sur un socle fixe (3) de forme conjuguée à celle de l'extrémité inférieure (45), pour la fermeture étanche de celle-ci dans la position de préchauffage (B').

2. Installation selon la revendication 1, caractérisée par le fait que le socle (3) de fermeture de l'enceinte (4) est ménagé sur un plancher de circulation (18) placé au niveau de la partie supérieure de la cuve (2') du four (2).

3. Installation selon l'une des revendications 1 et 2, caractérisée par le fait que l'enceinte de préchauffage (4) est portée par l'organe de transport (5) par l'intermédiaire de moyens de levage (54) déterminant le soulèvement et l'abaissement de l'enceinte (4) entre deux niveaux, respectivement un niveau haut de transport de l'enceinte (4) entre la position de préchauffage (B') et la position de déchargement (C') et un niveau bas pour lequel l'extrémité inférieure (42) de la jupe (43) est appliquée de façon étanche sur le socle de fermeture (3).

4. Installation selon la revendication 3, caractérisée par le fait que l'extrémité inférieure (42) de la jupe (43) a un profil correspondant sensiblement à celui du bord supérieur (22) de la cuve du four (2) de telle sorte que, dans la position de chargement (C'), ladite jupe (43) forme une hotte de guidage ascendant des fumées sortant du four (2) vers l'enceinte (4) qui constitue une cheminée d'évacuation desdites fumées.

5. Installation selon la revendication 4, caractérisée par le fait que la jupe (43) de l'enceinte (4) est ménagée pour servir au guidage descendant de la charge vers la cuve (2') du four (2).

6. Installation selon l'une des revendications précédentes caractérisée par le fait que le fond ouvrant (45) du récipient (40) est constitué de coquilles relevables et que la jupe (43) remonte au-dessus du niveau du fond (45) en entourant la paroi latérale (4) à une certaine distance de celle-ci pour ménager un espace annulaire fermé vers le haut dans lequel s'engagent les coquilles (45) à l'ouverture du four.

7. Installation selon la revendication 4, caractérisée par le fait que, après déplacement et mise en place de l'enceinte de préchauffage (4) au-dessus de la cuve (2'), les moyens de levage (54) déterminent l'abaissement de l'enceinte (4) de telle sorte que l'extrémité inférieure (42) de la jupe (43) se trouve sensiblement au niveau du bord supérieur (22) de la cuve (2').

8. Installation selon l'une des revendications 2 à 7, caractérisée par le fait que la paroi latérale de la jupe (43) est munie d'une tubulure (47) associée à un moyen (38) de branchement amovible sur l'une des branches (31) (32) du circuit de circulation des gaz.

9. Installation selon l'une des revendications 2 à 7, caractérisée par le fait que l'une des branches (31) (32) du circuit de circulation des gaz débouche à l'intérieur du socle fixe (3) par un orifice ménagé dans le plancher (18).

10. Installation selon l'une des revendications précédentes, caractérisée par le fait que le moyen de fermeture de l'extrémité supérieur (41) de l'enceinte de préchauffage (4) est un couvercle (7) monté sur un support (71) avec une possibilité de déplacement vertical limité pour son application sur l'extrémité supérieure (41) de l'enceinte (4) et son relèvement, et une possibilité de déplacement horizontal pour son écartement du récipient en position relevée, le couvercle (7) étant relevé et écarté de l'enceinte (4) au moins pour l'introduction de la charge froide.

11. Installation selon l'une des revendications 9 et 10, caractérisée par le fait que le couvercle (7) est muni d'une tubulure (71) associée à un moyen (73) de branchement amovible sur l'une des conduites (31) (32) de circulation des gaz chauds.

12. Installation selon l'une des revendications 1 à 11, caractérisée par le fait que l'organe de transport (5) de l'enceinte de préchauffage (4) comporte au moins un bras (51) monté pivotant autour d'un axe vertical sur un socle fixe (5) placé entre la zone de préchauffage (B) et la zone d'élaboration (C) et s'étendant en porte-à-faux jusqu'à une extrémité libre munie de moyens (53) de support de l'enceinte (4), et des moyens de commande de la rotation dudit bras (51) autour de son axe pour le déplacement de l'enceinte (4) suivant un arc de cercle entre la position de préchauffage (B') et la position (C') de déversement de la ferraille dans la cuve du four (2).

13. Installation selon l'une des revendications 1 à 12, caractérisée par le fait que l'enceinte de préchauffage est montée de façon amovible sur l'organe de transport (5).

14. Installation selon l'une des revendications 1 à 12, caractérisée par le fait que l'enceinte de préchauffage (4) est fixée de façon permanente sur l'organe de transport (5).

15. Installation selon la revendication 12, caractérisée par le fait que l'organe de transport (5) est muni d'au moins une trémie (63) de chargement en produits d'addition, solidaire en déplacement de l'enceinte de préchauffage (4).

16. Installation selon la revendication 15, caractérisée par le fait que la trémie (63) est disposée sur l'organe de transport (5) de façon à passer au-dessus de la cuve (2) du four avant ou après l'arrivée de l'enceinte de préchauffage en position de déversement dans une position intermédiaire de déversement des additions.

17. Installation selon l'une des revendications précédentes, caractérisée par le fait qu'elle est placée dans un bâtiment comportant deux halles parallèles adjacentes, respectivement une halle de préparation dans laquelle sont placées la zone de réception et la zone de préchauffage, et une halle d'élaboration dans laquelle est placé le four, l'organe de transport étant placé sur la jonction des deux halles pour le passage de l'enceinte de chargement d'une halle à l'autre.

18. Installation selon l'une des revendications précédentes de production d'un métal par la fusion d'une charge sur une sole (8) constituant le fond de la cuve (2') d'un four (2) en formant un bain de métal surmonté d'un laitier, ladite cuve (2') étant munie d'un orifice (24) de coulée du métal fondu et d'au moins un orifice (87) de décrassage et d'évacuation du laitier, l'ensemble de l'installation étant placé dans un bâtiment (1) comportant un plancher (18) de circulation de personnel et de matériel autour du four (2),
caractérisée par le fait que l'orifice de décrassage (87) a une section juste suffisante pour le passage du laitier et que le plancher de circulation (18) est placé au-dessus dudit orifice (87), à un niveau assez élévé pour que la plus grande partie de la paroi latérale (20) se trouve au-dessous dudit plancher (18) et que le bord supérieur (22) de la cuve (2') dépasse au-dessus de ce niveau d'une hauteur faible (h), inférieure à une hauteur d'homme et permettant l'inspection directe de la cuve (2), à partir du plancher (18) après l'ouverture du couvercle (23).

19. Installation selon l'une des revendications précédentes, caractérisée par le fait que la sole (8) est relevée sur ses bords par une paroi sensiblement verticale (85) en matière réfractaire formant la base de la paroi latérale (20) de la cuve (2') et que la sole (8) est munie, au niveau du seuil (83) de débordement du métal, d'un orifice de coulée (84) formé de façon amovible.

20. Installation de fusion selon l'une des revendications précédentes, caractérisée par le fait que la source de courant (16) est placée entièrement au-dessous du plancher de circulation (18).

## Claims

1. Installation for producing a metal such as steel by the melting of a charge of ferrous material such as scrap including:
- at least one electric furnace (2) comprising a melting pot (2') closed by a removable lid (23) and at least one electrode (24) connected to a current source (16) and capable of penetrating vertically into the pot by going through the lid (23),
- means (12) (14) for supplying individual charges intended to be fed one after the other into the furnace,
- a preheating chamber (4) limited by a side wall having two open ends, respectively upper (41) and lower (42) and within which is placed a charging vessel (40) equipped with a drop bottom (45), said vessel being associated, at least in a preheating position (B'), with removable closing means (7, 8) for substantially sealing both ends, respectively upper (41) and lower (42), and with means (47) (73) for the removable connection of said chamber (4) at two levels offset in height, respectively to a feed channel (31) and to a discharge channel (32) on a circuit (35) circulating a stream of hot gases for the preheating of the charge contained in the vessel (40),
- a unit (5) for transporting said chamber (4) with the charging vessel (40) between the preheating position (B') and a charging position (C') directly over the pot (2') of the furnace (2) to pour the charge by opening the bottom (45),
characterized by the fact that the lower part of the side wall of the preheating chamber (4) forms a skirt (43) opening widely downwards to a lower end (42) and that the chamber (4) is associated, in a preheating position, with removable means (54) for the sealed application of the lower part (42) onto a fixed part (3) having a shape mating with that of the lower part (45) for the sealed closure of the latter in the preheating position (B').

2. The installation of claim 1, characterized by the fact that the hearth (3) for closing the chamber (4) is arranged on a circulation floor (18) placed at the level of the upper part of the pot (2') of the furnace (2).

3. The installation of either of claims 1 or 2, characterized by the fact that the preheating chamber (4) is carried by the transport unit (5) through lifting means (54) determining the raising and lowering of the chamber (4) between two levels, respectively a high transport level of the chamber (4) between the preheating position (B') and the discharge position (C') and a lower level for which the lower end (42) of the skirt (43) is applied in a sealed manner onto the closing hearth (3).

4. The installation of claim 3, characterized by the fact that the lower end (42) of the skirt (43) has a shape corresponding substantially to the upper edge (22) of the pot of the furnace (2) so that, in the charging position (C'), said skirt (43) forms an ascending guide hood for gases leaving the furnace (2) towards the chamber (4) which constitutes a discharge stack for said gases.

5. The installation of claim 4, characterized by the fact that the skirt (43) of the chamber (4) is designed as a descending guide for the charge towards the pot (2') of the furnace (2).

6. The installation of any of the preceding claims, characterized by the fact that the drop bottom (45) of the vessel (40) is made up of liftable shells and that the skirt (43) rises over the level of the bottom (45) around the side wall (4) at a certain distance from it to provide an annular space closed at the top and in which the shells (45) engage upon the opening of the furnace.

7. The installation of claim 4, characterized by the fact that, after movement and placement of the preheating chamber (4) over the pot (2'), the lifting means (54) determine the lowering of the chamber (4) so that the lower end (42) of the skirt (43) is located substantially at the level of the upper edge (22) of the pot (2').

8. The installation of any of claims 2 to 7, characterized by the fact that the side wall of the skirt (43) is equipped with a nozzle (47) associated with a means (38) of removable connection onto one of the branches (31) (32) of the gas flow circuit.

9. The installation of any claims 2 to 7, characterized by the fact that one of the branches (31) (32) of the gas flow circuit leads into the fixed hearth (3) through a hole provided in the floor (18).

10. The installation of any of the preceding claims, characterized by the fact that the closing of the upper end (41) of the preheating chamber (4) is a lid (7) mounted on a support (71) with the possibility of limited vertical movement for its application on the upper end (41) of the chamber (4) and its raising, and a possibility of horizontal movement to move it away from the vessel in the raised position, the lid (7) being raised and moved away from the chamber (4) at least for the introduction of the cold charge.

11. The installation of either of claims 9 or 10, characterized by the fact that the lid (7) is equipped with a nozzle (71) associated with a means (73) of removable connection to one of the hot gas flow channels (31) (32).

12. The installation of any of claims 1 to 11, characterized by the fact that a transport unit (5) for the preheating chamber (4) includes at least one arm (51) mounted swivellably around a vertical axis on a fixed hearth (5) placed between the preheating zone (B) and the production zone (C) and extending cantilever fashion up to a free end provided with means (53) for supporting the chamber (4), and means for controlling the rotation of said arm (51) around its axis for the movement of the chamber (4) along a circular arc between the preheating position (B') and the position (C') of scrap discharge into the pot of the furnace (2).

13. The installation of any of claims 1 to 12, characterized by the fact that the preheating chamber is mounted removably on the transport unit (5).

14. The installation of any of claims 1 to 12, characterized by the fact that the preheating chamber (4) is fixed permanently on the transport unit (5).

15. The installation of claim 12, characterized by the fact that the transport unit (5) is equipped with at least one additional product feed hopper (63) moving jointly with the preheating chamber (4).

16. The installation of claim 15, characterized by the fact that the hopper (63) is placed on the transport unit (5) to pass over the pot of the furnace (2) before or after the arrival of the preheating chamber to the feeding position in an intermediate position for the feeding of additives.

17. The installation of any of the preceding claims, characterized by the fact that it is placed in a building between two adjacent parallel bays, respectively a preparation bay in which are located the reception zone and the preheating zone, and a production bay in which is located the furnace, the transport unit being placed on the junction of the two bays for the passage of the charging chamber from one bay to the other.

18. The installation of any of the preceding claims for producing metal by the melting of a charge on a hearth (8) constituting the bottom of the pot (2') of a furnace (2) overlain by a slag, said pot (2') being provided with a hole (24) for the pouring of molten metal and at least one hole (87) for slag removal, the entire installation being located in a building (1) having a working floor (18) allowing the movement of personnel and equipment around the furnace (2),
characterized by the fact that the slag removal hole (87) has a section just sufficient for the passage of the slag and that the floor (18) is placed over said hole (87), at a level high enough so that the greater part of the side wall (20) is located under said floor (18) and so that the upper edge (22) of the pot (2') goes beyond this level by a small height (h) less than the height of a man and allowing direct inspection of the pot (2) from the floor (18) after opening the lid (23).

19. The installation of any of the preceding claims, characterized by the fact that the hearth (8) is raised on its edges by a substantially vertical wall (85) in refractory material forming the base of the side wall (20) of the pot (2') and that the hearth (8) is equipped, at the level of the metal overflow threshold (83), with a pouring hole (84) designed removably.

20. The melting installation of any of the preceding claims, characterized by the fact that the current source (16) is located entirely under the working floor (18).

## Patentansprüche

1. Vorrichtung zur Herstellung von Metall wie Stahl durch Einschmelzen einer Charge aus Eisenmaterialien wie Schrott, bestehend aus
- mindestens einem Elektroofen (2), der ein durch einen abnehmbaren Deckel (23) verschlossenes Einschmelzgefäss (2') und mindestens eine mit einer Stromquelle (16) verbundene Elektrode (24) aufweist, die den Deckel (23) durchquerend senkrecht in das Gefäss eingeführt werden kann,
- Mitteln (12) (14) zum aufeinanderfolgenden Beschicken des Ofens mit einzelnen Chargen,
- einer Vorwärmhülle (4), die durch eine Seitenwand mit zwei offenen Enden, ein oberes (41) bzw. ein unteres (42), begrenzt ist, und in welcher ein Chargierbehälter (40) mit einem sich öffnenden Boden (45) angeordnet ist, wobei zum Vorwärmen der in dem Behälter (40) befindlichen Charge diese Hülle mindestens in der Vorwärmstellung (B') mit lösbaren Mitteln (7, 8) zum im wesentlichen dichtfesten Verschliessen seiner beiden, jeweils oberen (41) bzw. unteren (42) Enden, sowie mit Mitteln (47) (73) zum lösbaren Anschliessen dieser Hülle (4) in zwei versetzten Höhenlagen an eine Zufuhrleitung (31) und an eine Abzugsleitung (32) eines Warmgaskreislaufes (35) zum Vorwärmen der im Behälter (40) befindlichen Charge verbunden ist,
- einer Einrichtung (5) zum Verschieben dieser Hülle (4) mit dem Chargierbehälter (40) zwischen der Vorwärmstellung (B') und einer Chargierstellung (C') unmittelbar über dem Gefäss (2') des Ofens (2) zum Entleeren der Charge durch Öffnung des Bodens (45),
dadurch gekennzeichnet, dass das Seitenwand-Unterteil der Vorwärmhülle (4) eine nach unten bis zu einem unteren Ende (42) sich erweiternde Schürze (43) bildet, und dass die Hülle (4) in der Vorwärmstellung lösbare Mittel (54) zum dichtfesten Andrücken des unteren Endes (42) auf einer stationären Grundplatte (3) mit einer der Ausbildung des unteren Endes (45) zugehörigen Form, zum dichtfesten Verschliessen desselben in der Vorwärmstellung (B') aufweist.

2. Vorrichtung nach Anspruch 1, dadurch gekennzeichnet, dass die Grundplatte (3) zum Verschliessen der Hülle (4) auf einer auf dem Niveau des Oberteils des Gefässes (2') des Ofens (2) befindlichen Laufbühne (18) angeordnet ist.

3. Vorrichtung nach einem der Ansprüche 1 und 2, dadurch gekennzeichnet, dass die Vorwärmhülle (4) durch die Transporteinrichtung (5) über Hubmittel (54) getragen wird, die das Anheben und das Absenken der Hülle (4) zwischen zwei Höhenlagen, je eine obere Transportstellung der Hülle (4) zwischen der Vorwärmstellung (B') und der Entleerstellung (C'), bzw. eine untere Stellung bestimmt, in welcher das untere Ende (42) der Schürze (43) dichtfest gegen die Verschlussplatte (3) angedrückt ist.

4. Vorrichtung nach Anspruch 3, dadurch gekennzeichnet, dass das untere Ende (42) der Schürze (43) ein im wesentlichen dem Profil der Gefäss-Oberkante (22) des Ofens (2) entsprechendes Profil aufweist, so dass diese Schürze (43) in der Chargierstellung (C') einen Leitabzug für den aus dem Ofen (2) austretenden, zur Hülle (4) hin aufsteigenden Rauch bildet, die als Kaminabzug für diesen Rauch dient.

5. Vorrichtung nach Anspruch 4, dadurch gekennzeichnet, dass die Schürze (43) der Hülle (4) derart ausgebildet ist, dass sie die Charge zum Gefäss (2') des Ofens (2) nach unten leitet.

6. Vorrichtung nach einem der vorangehenden Ansprüche, dadurch gekennzeichnet, dass der Öffnungsboden (45) des Behälters (40) aus hochklappbaren Schalen besteht, und dass die Schürze über das Niveau des Bodens (45) hochfährt und somit die Seitenwand (4) in einem gewissen Abstand von der selben umschliesst zur Bildung eines nach oben geschlossenen kreisförmigen Raumes, der bei der Ofenöffnung die Schalen (45) aufnimmt.

7. Vorrichtung nach Anspruch 4, dadurch gekennzeichnet, dass nach dem Verschieben und Anordnen der Vorwärmhülle (4) über dem Gefäss (2') die Hubmittel (54) das Absenken der Hülle derart steuern, dass das untere Ende (42) der Schürze (43) im wesentlichen in der Höhe der Oberkante (22) des Gefässes (2') ist.

8. Vorrichtung nach einem der Ansprüche 2 bis 7, dadurch gekennzeichnet, dass die Seitenwand der Schürze (43) einen Rohrstutzen (47) aufweist, dem ein Mittel (38) mm lösbaren Anschliessen an den einen Zweig (31) (32) des Gaskreislaufes zugeordnet ist.

9. Vorrichtung nach einem der Ansprüche 2 bis 7, dadurch gekennzeichnet, dass der eine Zweig (31) (32) des Gaskreislaufes durch eine in dem Boden (18) angeordnete Öffnung innen in die stationäre Grundplatte (3) mündet.

10. Vorrichtung nach einem der vorangehenden Ansprüche, dadurch gekennzeichnet, dass das Verschlussmittel des oberen Endes (41) der Vorwärmhülle (4) ein auf einer Abstützung (71) montierter Deckel (7) mit begrenzter senkrechter Verfahrbarkeit zu dessen Anbringung auf dem oberen Ende (41) der Hülle (4) und zu dessen Anhebung, sowie mit horizontaler Verfahrbarkeit für dessen Entfernen vom Gefäss in der angehobenen Stellung ist, wobei zur Beschickung der kalten Charge der Deckel (7) angehoben und von der Hülle (4) entfernt wird.

11. Vorrichtung nach einem der Ansprüche 9 und 10, dadurch gekennzeichnet, dass der Deckel (7) einen Rohrstutzen (71) umfasst, dem ein Mittel (73) mm lösbaren Anschliessen an die eine der Warmgasumlaufleitungen (31) (32) zugeordnet ist.

12. Vorrichtung nach einem der Ansprüche 1 bis 11, dadurch gekennzeichnet, dass die Transporteinrichtung (5) der Vorwärmhülle (4) mindestens einen Arm (51), der auf einer stationären Grundplatte (5) zwischen der Vorwärmzone (B) und der Herstellungszone (C) um eine senkrechte Achse schwenbar montiert ist und sich kragartig bis zu einem freien Ende erstreckt, das Mittel (53) zur Abstützung der Hülle (4) aufweist, und Steuerungsmittel zum Schwenken dieses Armes (51) um seine Achse für das Verfahren der Hülle (4) gemäss einem Kreisbogen zwischen der Vorwärmstellung (B') und der Stellung (C') zum Chargieren des Schrottes in das Gefäss des Ofens (2) aufweist.

13. Vorrichtung nach einem der Ansprüche 1 bis 12, dadurch gekennzeichnet, dass die Vorwärmhülle auf der Transporteinrichtung (5) abnehmbar montiert ist.

14. Vorrichtung nach einem der Ansprüche 1 bis 12, dadurch gekennzeichnet, dass die Vorwärmhülle (4) auf der Transporteinrichtung (5) dauerhaft montiert ist.

15. Vorrichtung nach Anspruch 12, dadurch gekennzeichnet, dass die Transporteinrichtung (5) mindestens einen mit der Vorwärmhülle (4) verfahrbaren Einfülltrichter (63) für die Zuschlagstoffe umfasst.

16. Vorrichtung nach Anspruch 15, dadurch gekennzeichnet, dass der Trichter (63) auf der Transporteinrichtung (5) derart angeordnet ist, dass er über dem Ofengefäss (2) vor und nach dem Eintreffen der Hülle in der Einfüllstellung in eine Zwischenstellung zum Beschicken der Zuschlagstoffe übergeht.

17. Vorrichtung nach einem der vorangehenden Ansprüche, dadurch gekennzeichnet, dass sie in einem Gebäude mit zwei parallel angeordneten benachbarten Hallen, je eine Vorbereitungshalle mit der Aufnahmezone und der Vorwärmzone und eine Herstellungshalle mit dem Ofen, untergebracht ist, wobei sich die Transporteinrichtung an der Schnittstelle der beiden Hallen zur Durchfahrt der Chargierhülle von einer Halle zur anderen befindet.

18. Vorrichtung nach einem der vorangehenden Ansprüche zur Metallherstellung durch Einschmelzen einer Charge auf einem den Boden des Gefässes (2') eines Ofens (2) bildenden Herd (8) unter Bildung eines Metallbades mit einer darüberschwimmenden Schlacke, wobei das Gefäss (2') eine Ausflussöffnung (24) für das geschmolzene Metall und mindestens eine Öffnung (87) zum Abschlacken und Entsorgen der Schlacke umfasst, und wobei die gesamte Vorrichtung in einem Gebäude (1) mit einer um den Ofen herum angeordneten Laufbühne (18) für das Personal und das Material untergebracht ist, dadurch gekennzeichnet, dass die Abschlacköffnung (87) einen zum Schlackendurchlass gerade ausreichenden Querschnit aufweist, und dass die Laufbühne (18) über dieser Öffnung auf einem genügend hohen Niveau angeordnet ist, damit der grösste Teil der Seitenwand (20) sich unter dieser Bühne (18) befindet und die Oberkante (22) des Gefässes (2') über diesem Niveau mit einer geringfügigen Höhe hinausragt, die kleiner als eine Mannhöhe ist und die unmittelbare Inspektion des Gefässes (2) nach Öffnung des Deckels (23) von der Bühne (18) aus ermöglicht.

19. Vorrichtung nach einem der vorangehenden Ansprüche, dadurch gekennzeichnet, dass die Kanten des Herdes (8) durch eine im wesentlichen senkrechte, aus feuerfestem Material bestehende Wand hochgezogen sind, welche die Basis der Seitenwand (20) des Gefässes (2') bildet, und dass der Herd (8) in der Höhe der Metallüberlaufschwelle (83) eine abnehmbar ausgebildete Auslassöffnung (84) aufweist.

20. Einschmelzvorrichtung nach einem der vorangehenden Ansprüche, dadurch gekennzeichnet, dass die Stromquelle (16) vollständig unter der Laufbühne (18) untergebracht ist.
